**Europäisches Patentamt**

**European Patent Office**

**Office européen des brevets**

(11) Veröffentlichungsnummer: **0 174 636**
**A2**

# (12) EUROPÄISCHE PATENTANMELDUNG

(21) Anmeldenummer: 85111426.4

(22) Anmeldetag: 10.09.85

(51) Int. Cl.⁴: **G 11 B 20/18**
**H 03 M 13/22**

(30) Priorität: 14.09.84 DE 3433819

(43) Veröffentlichungstag der Anmeldung:
19.03.86 Patentblatt 86/12

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Buchsteiner, Wilfried, Dipl.-Ing.
Hawartstrasse 10
D-8000 München 19(DE)

(54) Verfahren zur Fehlerverdeckung.

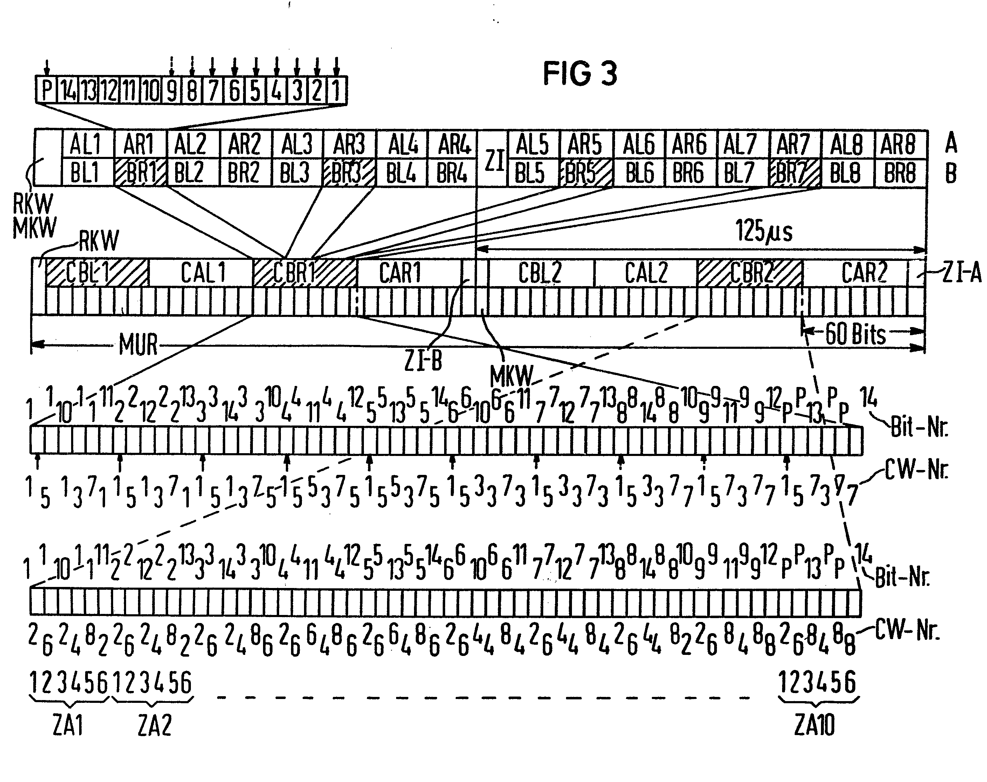

(57) Verfahren zur Fehlerverdeckung bei digitaler Tonübertragung zweier Stereo-Tonkanäle (A, B), deren Codewörter
und deren Bits innerhalb eines Multiplexrahmens MUR so
verschachtelt werden, bei dem bei Verwendung des HDB3-
Codes oder eines Scramblers bei den meisten Bitstörungen
eine Fehlererkennung aufgrund einer einfachen Paritätssicherung möglich ist und das gestörte Codewort durch einen
Interpolationswert ersetzt wird, der aus benachbarten Codewörtern ermittelt wird (Fig. 3).

EP 0 174 636 A2

./...

Croydon Printing Company Ltd.

FIG 3

Siemens Aktiengesellschaft    —    Unser Zeichen:
Berlin und München                VPA 84 P 1 6 9 3 E

0174636

## Verfahren zur Fehlerverdeckung

Die Erfindung betrifft ein Verfahren zur Fehlerverdeckung nach dem Oberbegriff des Patentanspruchs 1.

Aus der Zeitschrift Telcom Report 2 (1979) Beiheft "Digital-Übertragungstechnik", Seite 52 bis 58 ist ein PCM-Tonkanalsystem zur Übertragung von Stereo-Tonkanälen bekannt. Die Übertragung der Abtastwerte geschieht in kompandierter Form. Die höchstwertigen Bits jedes einem Abtastwert entsprechenden Codewortes sind durch ein zusätzliches Paritätsbit geschützt. Die geschützten höchstwertigen Bits sind mit den ungeschützten niederwertigeren Bits verschachtelt, um die Störung von mehr als einem geschützten Bit möglichst zu vermeiden. Bei einer erkannten Störung wird das letzte störungsfreie Codewort wiederholt, also eine einfache Extrapolation durchgeführt. Bei mehreren Störungen erfolgt eine weiche Abschaltung des Signals.

Aufgabe der Erfindung ist es, ein verbessertes Verfahren zur Fehlerverdeckung bei digitaler Tonübertragung anzugeben.

Ausgehend vom einleitend beschriebenen Stand der Technik wird die Aufgabe durch die im kennzeichnenden Teil des Patentanspruches 1 angegebenen Merkmale gelöst.

Vorteilhaft bei dem angegebenen Verfahren ist die angegebene Rahmenbelegung und Bitverschachtelung. Durch die Bitverschachtelung innerhalb eines Codierblockes wird erreicht, daß mit großer Wahrscheinlichkeit nur ein einziges Bit eines Codewortes gestört wird. Bis zu neun höchstwertige Bits können bei der angegebenen Codeblockstruktur durch ein Paritätsbit geschützt werden. Durch

P 1 Or / 11.9.1984

die Verschachtelung der Codeblöcke wird erreicht, daß
auch bei länger andauernden Bündelstörungen nicht zwei
aufeinanderfolgende Codewörter eines Mono-Tonkanals gestört werden. So kann bei einem gestörten Codewort, der
entsprechende Abtastwert durch Interpolation aus den benachbarten ungestörten Codewörtern gewonnen werden. Zur
Interpolation können zwei oder mehrere benachbarte Codewörter verwendet werden. Die bisher bekannte Methode zur
Unterdrückung von Knackgeräuschen kann, z.B. bei dem
letzten Abtastwert vor Musikpausen, beibehalten werden.

Das Verfahren wird anhand der Fig. 1 bis 5 näher erläutert.

Es zeigen

Fig. 1 mögliche Fehlermuster bei Verwendung des HDB-3-
Codes,
Fig. 2 ein Fehlermuster bei der Verwendung eines Scramblers,
Fig. 3 die Belegung eines Multiplexrahmens mit 512 Bits,
Fig. 4 ein Prinzipschaltbild zur Realisierung des Verfahrens,
Fig. 5 ein Prinzipschaltbild zur sendeseitigen Bitverschachtelung und
Fig. 6 ein Prinzipschaltbild zur empfangsseitigen Wiederherstellung eines kontinuierlichen Datenflusses.

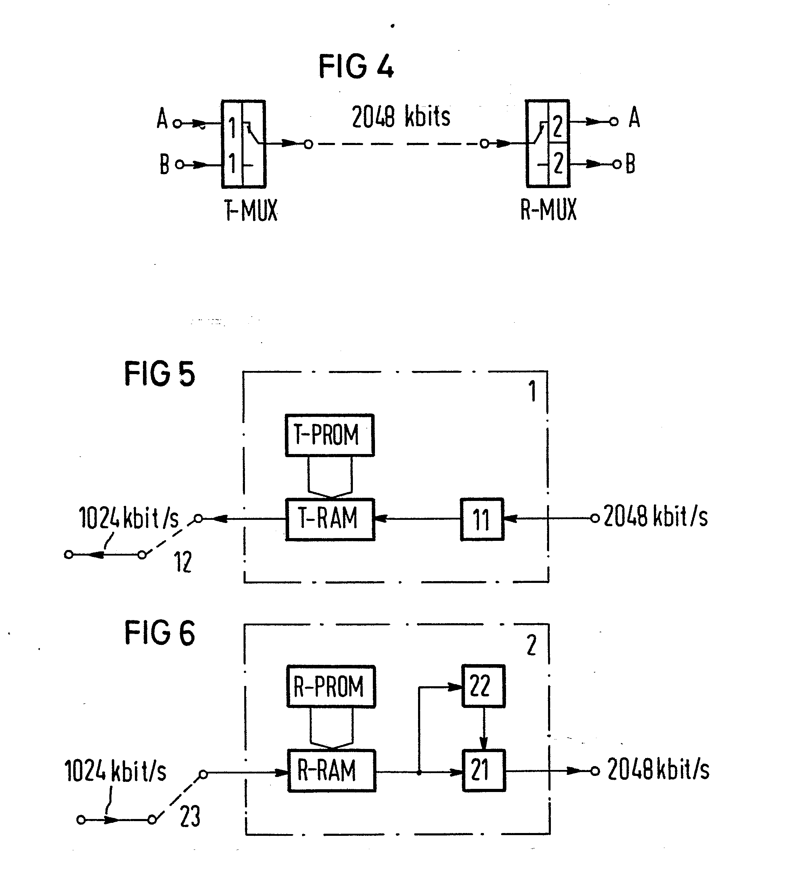

Nach Fig. 4 werden zwei Stereo-Tonkanäle A und B mit einer
Datenübertragungsrate von jeweils 1024 kbit/s
in einen Sendemultiplexer T-MUX zusammengefaßt und mit
2048 kbit pro Sekunde übertragen. Empfangsseitig werden
durch einen Demultiplexer R-MUX beide Stereo-Tonkanäle A
und B aus dem Multiplexsignal gewonnen. Die Abtastproben
werden als Codewörter übertragen, die 14 Informationsbits und ein Paritätsbit enthalten. Außerdem enthält das Multiplexsignal in bekannter Weise ein Rahmenkennungswort, eine Meldekennwort und kanalspezifische Zusatzinformationen.

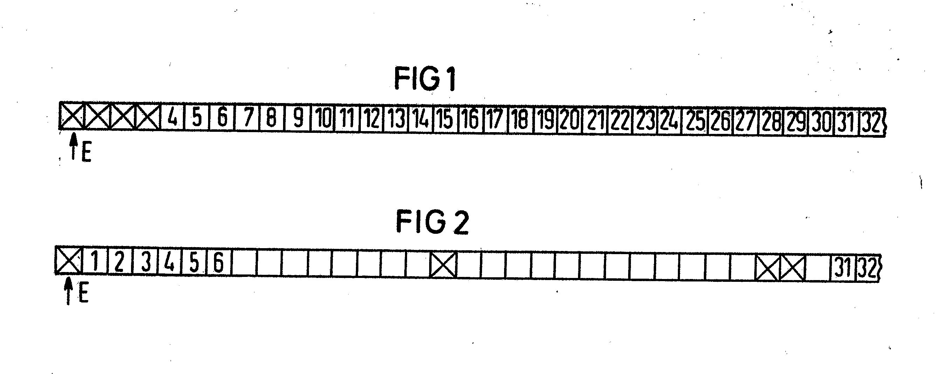

Auf der Übertragungsstrecke wird häufig der sog. HDB3-Code (CCITT-G703) verwendet. Ein gestörtes Bit auf der Übertragungsseite bewirkt bei dieser Codierung bis zu 3 Bitfehlern innerhalb der Zeitspanne von 4 Bits (Fig. 1). Hierbei muß das gestörte Bit nicht das erste, in Fig. 1 mit 0 bezeichnete Bit sein.

Bei der Übertragung binärer Daten ist ebenfalls der Einsatz eines Scramblers üblich. Der für die Übertragung von Tonkanälen vorgesehene Scrambler verursacht bei der Störung eines einzigen Bits je 4 Bitfehler empfangsseitig. Außer dem gestörten Bit 0 bewirkt eine Fälschung die noch die Störung weiterer 3 Bits im Abstand von 15, 28 und 29 Bits zum Störereignis (Fig. 2).

Nach Fig. 3 können innerhalb eines Multiplexrahmens MUR von 512 Bits jeweils 8 Codewörter eines linken Mono-Tonkanals AL und eines rechten Tonkanals AR eines ersten Stereo-Tonkanals A und ebenso viele Codewörter eines zweiten Stereo-Kanals mit den Mono-Tonkanälen BL und BR untergebracht werden. Die Codewörter sind von 1 bis 8 durchnummeriert. Jeweils alle ungeradzahligen Codewörter und ebenso alle geradzahligen Codewörter eines Mono-Tonkanals werden zu einem Codeblock CBL1 bis CAR2 zusammengefaßt. Die Bezeichnungen für den ersten (linken) und zweiten (rechten) Mono-Tonkanal wurden beibehalten. Die Codeblöcke werden nach einem Rahmenkennungswort RKW in der Reihenfolge CBL1, CAL1, CBR1, CAR1 ausgesendet. Es folgt eine 8 Bits umfassende Zusatzinformation ZI-B, das Meldekennwort MW (auch als Meldewort oder Meldekennungswort bezeichnet) und anschließend die nur geradzahlige Codewörter umfassenden Codeblöcke CBL2, CAL2, CBR2 und

0174636

CAR2. Am Ende eines Multiplexrahmens wird die ebenfalls 8 Bits umfassende Zusatzinformation ZI-A für den Stereo-Tonkanal A übertragen. Jeder Codeblock umfaßt 60 Bits. Diese 60 Bits sind in 10 jeweils 6 Bits umfassende Zeitabschnitte ZA1 bis ZA10 unterteilt. In jedem dieser Zeitabschnitte wird jeweils eines der höchstwertigen 9 Bits jedes der vier Codewörter eines Codeblockes übertragen. Zunächst werden alle höchstwertigen Bits, die die Bitnummer 1 tragen der 4 Codewörter eines Blockes im ersten Zeitabschnitt ZA1 übertragen. Bei einem Codeblock, beispielsweise der Codeblock CBR1, der nur ungeradzahlige Codewörter eines Mono-Tonkanals enthält, wird zunächst das höchstwertige Bit des Codewortes BR1 übertragen, dann das höchstwertige Bit des fünften Codewortes BR5, die Bitpositionen 4 und 5 werden mit den höchstwertigen Bits des dritten Codewortes BR3 und des siebten Codewortes BR7 besetzt. In Fig. 3 (unten) gibt die untere Ziffer jeweils die Codewortnummer CW-Nr und die obere Ziffer die Bitnummer des jeweiligen Codewortes an. Der zweite Zeitabschnitt wird in derselben Weise mit den zweithöchstwertigen Bits der Codewörter BR1, BR5, BR3 und BR7 besetzt. Die ersten neun Zeitabschnitte sind entsprechend mit den neun höchstwertigen Bits besetzt. Im zehnten Zeitabschnitt ZA10 sind die Bitpositionen 1 bis 6 in derselben Weise von den zugehörigen Paritätsbits belegt. Die freien Bitpositionen werden nacheinander mit den niederwertigeren Bits der Codewörter aufgefüllt. So werden zunächst die Bitpositionen 3 und 6 des ersten Zeitabschnitts ZA1 durch das 10. und 11. Bit des ersten Codewortes belegt, dann die Bitpositionen 3 und 6 des zweiten Zeitabschnittes ZA2 mit dem 12. und 13. Bit usw. Anschließend erfolgt die Belegung mit den niederwertigeren Bits des zweiten Codewortes. Bei einem Codeblock, der nur geradzahlige Codewörter enthält, erfolgt die Belegung entsprechend, wobei die Codewörter 2, 6, 4, 8 an die Stelle der Codewörter 1, 5, 3 und 7 treten. Bei dieser gewählten Bitverschachtelung wird durch ein gestör-

0174636

VPA 84 P 1 693 E

tes Bit eines Codewortes auch aufgrund der Fehlerfortpflanzungseigenschaften des HDB3-Codes kein weiteres Bit
desselben Codewortes gefälscht. Dasselbe gilt bei der
Verwendung eines Scramblers. Bei kurzen Bündelstörungen
verteilen sich die Bitfehler auf die verschiedenen Codewörter, so daß im allgemeinen ebenfalls nur ein Bit eines
Codewortes gefälscht wird und dadurch die Paritätsprüfung erfolgreich einsetzbar ist.

Bei dem in Fig. 3 angegebenen Multiplexrahmen kann es,
wenn alle möglichen Bitkombinationen für die Zusatzinformationen ZI-A und ZI-B zugelassen sind, zur Vortäuschung eines Rahmenkennungswortes und eines Meldekennwortes kommen. Die letzten Bits einer Zusatzinformation
und die ersten Bits des Rahmenkennungswortes oder des
Meldekennwortes bilden hierbei ein vorgetäuschtes Rahmenkennungswort oder Meldekennwort. Eine einfache Abhilfe besteht darin, daß die Zusatzinformation zwischen
jeweils zwei Codeblöcken übertragen wird.

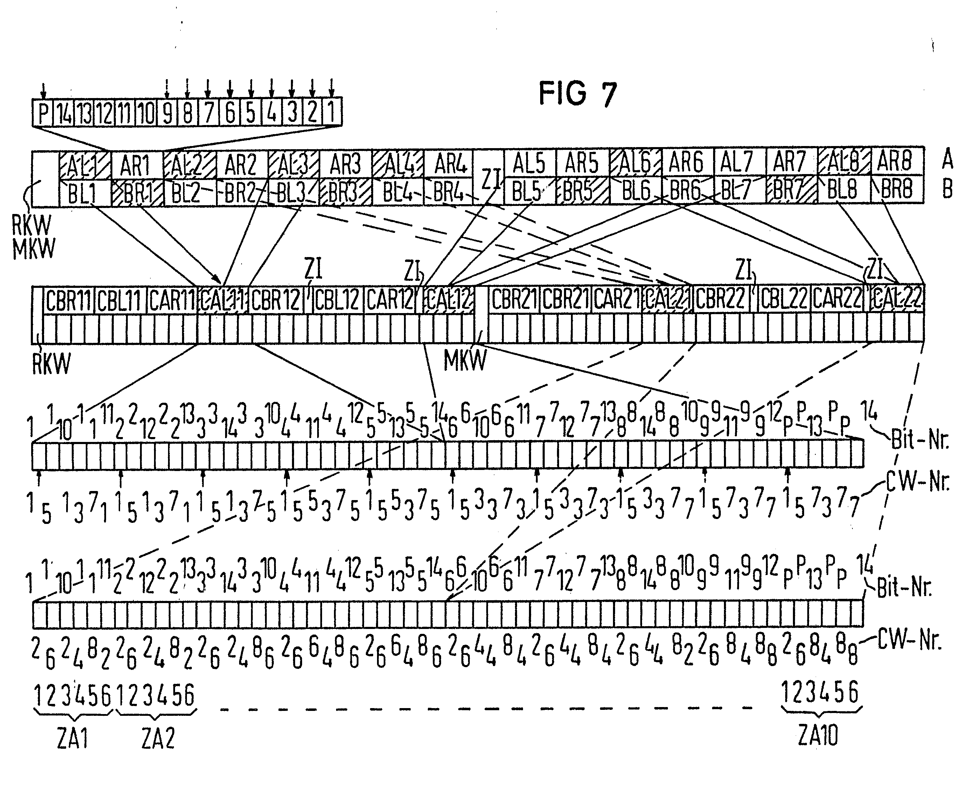

Ein vorteilhafter Multiplexrahmen ist in Fig. 7 dargestellt. Die Codeblöcke werden in derselben Weise gebildet. Anschließend werden sie jedoch in jeweils zwei Teilcodeblöcke aufgeteilt. Beispielsweise wird der ursprüngliche Codeblock CAL1 in zwei Teilcodeblöcke CAL11 und
CAL12 geteilt. Der erste Teilcodeblock umfaßt hierbei
die ersten 30 Bits, der zweite Teilcodeblock umfaßt hierbei die letzten 30 Bits des ursprünglichen Codeblockes.
In derselben Weise werden auch alle anderen ursprünglichen Codeblöcke aufgeteilt. Die Teilcodeblöcke werden
miteinander verschachtelt. Bei dem angegebenen Multiplexrahmen liegen zwischen zwei zusammengehörigen Teilcodeblöcken, beispielsweise CAL11 und CAL12 drei weitere
Teilcodeblöcke. Die Zusatzinformation ZI ist in 4-Bit-
blöcke aufgeteilt, sie wird jeweils nach dem fünften und
siebten Teilcodeblock nach dem Rahmenkennungswort und ebenso nach dem fünften und siebten Teilcodewort nach dem Meldekennwort MKW übertragen. Die 4-Bit-Blöcke mit Zusatzinformation enthalten jeweils zwei aufeinanderfolgende Bits der Zusatzinformation für einen Kanal, zweckmäßigerweise zunächst jeweils zwei Bits Zusatzinformation für den rechten Mono-Tonkanal und dann zwei Bits für den linken Mono-Tonkanal. Durch die gewählte Bildung des Multiplexrahmens werden durch die Zusatzinformation jeweils die beiden letzten Bits eines ursprünglichen Tonkanals und die beiden ersten Bits des folgenden ursprünglichen Tonkanals belegt. Bei einer nichtvollständigen Belegung durch Tonkanäle wird somit auch ein ursprünglicher Übertragungskanal nicht mehr durch die Zusatzinformation benutzt.

Mehrere der in Fig. 3 oder Fig. 7 dargestellten Multiplexrahmen lassen sich wieder zu einem Multiplexsystem höherer Ordnung zusammenfassen.

In Fig. 5 und Fig. 6 wird das Prinzipschaltbild nach Fig. 4 näher erläutert. Die Codewörter eines Stereo-Tonkanals werden einer Datensicherung 11 eines zweimal vorhandenen sendeseitigen Verarbeitungsteiles 1 zugeführt. In der Datensicherung wird das Paritätsbit gebildet und im Anschluß an jedes Codewort angefügt. Anschließend werden die paritätsgesicherten Codewörter in einen sendeseitigen Schreib-Lese-Speicher T-RAM eingeschrieben und aus diesen in der in Fig. 3 dargestellten Reihenfolge bitweise mit der doppelten Geschwindigkeit ausgelesen. Die Adressensteuerung erfolgt hierbei über einen sendeseitigen Lesespeicher T-PROM. Die Taktversorgung und die notwendige Steuerung, beispielsweise durch einen Zähler, für den Lesespeicher T-PROM wurde nicht dargestellt. Der sendeseitige Verarbeitungsteil ist zweimal vorhanden. Durch den Multiplexer 12 werden die mit doppelter Geschwindigkeit ausgelesenen Datenblöcke des ersten Stereo-Tonkanals

0174636

A mit denen des zweiten Stereo-Tonkanals B verschachtelt.

In Fig. 6 ist der ebenfalls zweimal vorhandene empfangsseitige Verarbeitungsteil 2 dargestellt. Durch einen Demultiplexer 23 werden die Datenblöcke des ersten und des zweiten Stereo-Tonkanal den beiden empfangsseitigen Verarbeitungsteilen 2 getrennt zugeführt. Die Datenblöcke werden in einen empfangsseitigen Schreib-Lese-Speicher R-RAM eingeschrieben, aus dem die Codeblöcke, gesteuert von einem empfangsseitigen Lesespeicher R-PROM, in der ursprünglichen Reihenfolge (Fig. 3, obere Anordnung der Codewörter) ausgelesen werden. Eine Fehlererkennung 21 überprüft die Codewörter ständig, während in einer Interpolationsschaltung 22 beispielsweise eine Mittelwertbildung stattfindet. Erweist sich beispielsweise das Codewort BR3 als gestört, so wird der Mittelwert der Codewörter BR2 und BR4 statt des gestörten Codewortes BR3 ausgegeben. Um eine zeitgerechte Ausgabe zu erreichen sind sowohl in der Interpolationsschaltung als auch in der Fehlererkennung Laufzeitglieder, beispielsweise Schieberegister, erforderlich.

Bei der Realisierung der Schaltung sind zahlreiche Variationen möglich, deren Realisation einen Fachmann jedoch keine Schwierigkeiten bereitet.

10 Patentansprüche
7 Figuren

0174636

VPA 84 P 1 6 9 3 E

<u>Patentansprüche</u>

1. Verfahren zur Fehlerverdeckung bei digitaler Tonübertragung zweier Stereo-Tonkanäle (A,B), die jeweils wieder zwei Mono-Tonkanäle (AL,AR;BL,BR) enthalten, innerhalb eines Multiplexrahmens, dessen Rahmenkennungswort,
Meldekennwort und Länge CCITT-G732 entspricht, bei dem
die höchstwertigen Bits jedes einen Abtastwert darstellenden Codewortes durch ein Paritätsbit (P) gesichert
sind und die gestörten Codewörter empfangsseitig durch
Interpolation und/oder Extrapolation aus den benachbarten Codewörtern gewonnen werden, d a d u r c h g e -
k e n n z e i c h n e t , daß innerhalb eines Multiplexrahmens (MUR) für jeden Mono-Tonkanal (AL,AR;BL,BR)
8 Codewörter (AL1 bis AL8;AR1 bis BL1...) mit jeweils
14 Bits und einem Paritätsbit (P) übertragen werden,
daß jeweils vier ungeradzahlige Codewörter (AL1, AL3,
AL5,AL7;AR1...) und vier geradzahlige Codewörter (AL2,
AL4,AL8;AR2...) jedes Mono-Tonkanals (AL,AR,BL,BR) des
Multiplexrahmens (MUR) zu jeweils einem Codeblock (CAL1,
CAR1,CBL1,CBR1;CAL2...) zusammengefaßt werden,
daß die Codeblöcke beider Stereo-Tonkanäle (A,B) miteinander verschachtelt werden,
daß innerhalb jeden Codeblocks (CBL1,CAL1,...) periodisch
innerhalb von jeweils 6 Bits umfassenden Zeitabschnitten
(ZA1 bis ZA10) von jedem der vier zugehörigen Codewörter
(BR1,BR3,BR5,BR7) jeweils eines der neun höchstwertigen
Bits desselben Ranges und die zugehörigen Paritätsbits
(1P,3P,5P,7P) angeordnet werden und daß die verbleibenden Bitpositionen durch die niederwertigeren Bits belegt
werden.

2. Verfahren nach Anspruch 1, d a d u r c h g e -
k e n n z e i c h n e t , daß innerhalb jeden Zeitabschnittes (ZA1 bis ZA10) die Bitpositionen 1,2,4 und 5
mit den höchstwertigen Bits belegt werden.

0174636
VPA 84 P 1 6 9 3 E

3. Verfahren nach Anspruch 2, d a d u r c h   g e -
k e n n z e i c h n e t ,   daß die Bitpositionen 1,2,4
und 5 der Zeitabschnitte (ZA1 bis ZA10) jeweils mit
einem gleichrangigen der neuen höchstwertigen Bits und
der Paritätsbits des ersten, dritten, zweiten und vierten Codewortes (BR1,BR5,BR3,BR7) eines Codeblockes (CBR1)
belegt werden.

4. Verfahren nach Anspruch 3, d a d u r c h   g e -
k e n n z e i c h n e t ,   daß die nicht belegten Bitpositionen 3 und 6 der Zeitabschnitte (ZA1 bis ZA10)
nacheinander mit den Bits 10 bis 14 des ersten, dritten,
zweiten und vierten Codewortes (BR1,BR5,BR3,BR7) des
Codeblockes (CBR1) belegt werden.

5. Verfahren nach einem der vorhergehenden Ansprüche,
d a d u r c h   g e k e n n z e i c h n e t ,   daß
sieben bis neun höchstwertige Bits jeden Codewortes
(AL1,AL2,...) durch ein Paritätsbit gesichert werden.

6. Verfahren nach Anspruch 1, d a d u r c h   g e -
k e n n z e i c h n e t ,   daß zwischen der Übertragung
zweier Codeblöcke (CBR1,CBR2) eines Mono-Tonkanals (BR)
drei weitere Codeblöcke (CAR1,CBL2,CAL2) der übrigen
drei Mono-Tonkanäle (AR,BL,AL) übertragen werden.

7. Verfahren nach Anspruch 1, d a d u r c h   g e -
k e n n z e i c h n e t ,   daß ein Rahmenkennungswort
mit acht Bits Länge am Anfang jedes Multiplexrahmens
(MUR) übertragen wird, daß acht Bits Zusatzinformation
(ZI-B) für den ersten Stereo-Tonkanal (B) in der ersten
Hälfte des Multiplexrahmens (MUR) übertragen wird, daß
zu Beginn der zweiten Hälfte des Multiplexrahmens (MUR)
ein acht Bit umfassendes Meldekennwort (MKW) übertragen
wird und daß innerhalb der zweiten Hälfte des Multiplexrahmens (MUR) nochmals acht Bits an Zusatzinformation
(ZI-A) für den zweiten Stereo-Tonkanal (A) übertragen wird.

0174636

VPA 84 P 1 6 9 3 E

8. Verfahren nach Anspruch 7, d a d u r c h g e - k e n n z e i c h n e t , daß die Zusatzinformation (ZI-A, ZI-B) jedes Stereo-Tonkanals (A,B) jeweils zwischen zwei Codeblöcken (CBL1 und CAL1, CAL1 und CBR1,...) ausgesendet wird.

9. Verfahren nach Anspruch 1 bis 5, d a d u r c h g e k e n n z e i c h n e t , daß jeder Codeblock (CBL1, CAL1,...) in jeweils zwei gleichgroße Code-Teilblöcke (CBL11, CBL12; CAL11, CAL12,...) aufgeteilt wird, daß die Zusatzinformation (ZI) jeweils in Blöcken von 4 Bits aufgeteilt wird, wovon jeweils zwei aufeinanderfolgende Bits einem Mono-Tonkanal (AR,AL) zugeordnet sind, und daß die Blöcke mit 4 Bits Zusatzinformation (ZI) jeweils nach dem fünften und siebten Code-Teilblock (CBR12,CA12,...) nach dem Rahmenkennwort (RKW) und dem Meldekennwort (MKW) übertragen werden.

10. Verfahren nach Anspruch 1, d a d u r c h g e - k e n n z e i c h n e t , daß 2·n (n = 2,3,4...)Stereo- Tonkanäle zu einem Multiplex-Signal zusammengefaßt wer- den.

# FIG 1

| ☒ | ☒ | ☒ | ☒ | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |

↑E

# FIG 2

| ☒ | 1 | 2 | 3 | 4 | 5 | 6 | | | | | | | | | ☒ | | | | | | | | | | ☒ | ☒ | | 31 | 32 |

↑E

0174636

## FIG 3

# FIG 4

A → 1 | 1 T-MUX → ——— 2048 kbits ——— → 2 | 2 R-MUX → A
B → → B

# FIG 5

T-PROM

1024 kbit/s ← T-RAM ← 11 ← 2048 kbit/s

12

1

# FIG 6

R-PROM     22

1024 kbit/s → R-RAM → 21 → 2048 kbit/s

23

2

FIG 7